(19)

Europäisches
Patentamt
European
Patent Office
Office européen
des brevets

(11) **EP 2 439 543 A1**

(12) # EUROPEAN PATENT APPLICATION
published in accordance with Art. 153(4) EPC

(43) Date of publication:
**11.04.2012 Bulletin 2012/15**

(21) Application number: **09845519.9**

(22) Date of filing: **03.06.2009**

(51) Int Cl.:
*G01P 21/00* (2006.01)      *B60W 30/00* (2006.01)
*B60W 40/06* (2012.01)      *B60W 40/10* (2012.01)
*G01B 21/22* (2006.01)      *G01C 19/00* (2006.01)
*G01P 15/00* (2006.01)

(86) International application number:
**PCT/JP2009/060161**

(87) International publication number:
**WO 2010/140234 (09.12.2010 Gazette 2010/49)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Toyota Jidosha Kabushiki Kaisha
Toyota-shi, Aichi 471-8571 (JP)**

(72) Inventor: **SHIMIZU Masayuki
Toyota-shi
Aichi 471-8571 (JP)**

(74) Representative: **Winter, Brandl, Fürniss, Hübner,
Röss, Kaiser, Polte - Partnerschaft
Alois-Steinecker-Strasse 22
85354 Freising (DE)**

(54) **SENSOR OFFSET AMOUNT ESTIMATE DEVICE**

(57)      Provided is a sensor offset amount estimate device capable of accurately estimating the offset amount of a sensor. In a sensor offset amount estimate device 1, a sensor correction calculation unit 8 estimates the offset amounts of a left and right acceleration sensor 3, a steering angle sensor 4, and a yaw rate sensor 5 on the basis of a motion equation considering road camber when a vehicle X is turned and traveling information detected by a sensor 2. Therefore, even when the vehicle travels on the road with road camber, it is possible to accurately estimate the offset amounts of the sensors 3 to 5.

**Fig.1**

EP 2 439 543 A1

## Description

### Technical Field

The present invention relates to an offset amount estimate device that estimates the offset amount of a sensor detecting the traveling information of a vehicle.

### Background Art

For example, Patent Literature 1 discloses an offset amount estimate device in the related art. The sensor offset amount estimate device estimates an offset amount, which is the positional deviation of a neutral point (zero point) in a left and right acceleration sensor on the basis of the left and right acceleration estimated from the speed and steering angle of a vehicle and an output value from the left and right acceleration sensor.

### Citation List

### Patent Literature

Patent Literature 1: Japanese Unexamined Patent Application Publication No. 8-136572

### Summary of Invention

### Technical Problem

However, the sensor offset amount estimate device does not consider the influence of a road surface cant (the inclination of a road surface). Therefore, for example, even when the offset amount is changed, it is difficult to determine whether the change is caused by the error of the road surface cant or the error of the sensor. Therefore, it is difficult to accurately estimate the offset amount.

An object of the invention is to provide a sensor offset amount estimate device capable of accurately estimating the offset amount of a sensor.

### Solution to Problem

In order to achieve the object, according to an aspect of the invention, there is provided a sensor offset amount estimate device that estimates offset amounts of sensors detecting traveling information of a vehicle. The sensor offset amount estimate device includes an offset amount estimating unit that estimates the offset amount of at least one of a left and right acceleration sensor, a steering angle sensor, and a yaw rate sensor serving as the sensors on the basis of a motion equation considering a road surface cant when the vehicle is turned and the traveling information detected by the sensors.

In the sensor offset amount estimate device according to the above-mentioned aspect of the invention, even when the vehicle travels on a road with a road surface cant, it is possible to estimate the offset amount of at least one of the left and right acceleration sensor, the steering angle sensor, and the yaw rate sensor serving as the sensors, appropriately considering the road surface cant. That is, according to the invention, it is possible to accurately estimate the offset amount of the sensor.

The offset amount estimating unit may derive, as the motion equation, a yaw rate calculation expression related to a yaw rate of the vehicle and a slip angle calculation expression related to a slip angle of the vehicle, and derive a self-aligning torque calculation expression related to a self-aligning torque of the vehicle on the basis of a balance equation of force around a tire of the vehicle. The offset amount estimating unit may estimate the offset amounts of the left and right acceleration sensor, the steering angle sensor, and the yaw rate sensor from the yaw rate calculation expression, the slip angle calculation expression, the self-aligning torque calculation expression, and the traveling information. When the offset estimating unit is formed in this way, it is possible to accurately estimate the offset amounts of the left and right acceleration sensor, the steering angle sensor, and the yaw rate sensor at a time.

The offset amount estimating unit may derive, as the motion equation, a yaw rate calculation expression related to a yaw rate of the vehicle and a slip angle calculation expression related to a slip angle of the vehicle. The offset amount estimating unit may estimate the offset amounts of the left and right acceleration sensor and the steering angle sensor from the yaw rate calculation expression, the slip angle calculation expression, and the traveling information. In this case, it is possible to simplify the operation of the offset amount estimating unit.

The offset amount estimating unit may derive a yaw rate calculation expression related to a yaw rate of the vehicle as the motion equation, and estimate the offset amount of the left and right acceleration sensor from the yaw rate calculation expression and the traveling information. In this case, it is possible to further simplify the operation of the offset amount estimating unit.

The offset amount estimating unit may include an offset amount correcting unit that corrects the set offset amount of the sensor on the basis of the estimated offset amount of the sensor. In this case, the set offset amount is appropriately corrected.

In this case, the offset amount correcting unit may vary a rate of change in the offset amount in the correction, depending on the degree of at least one of the steering angle, the slip angle, and the yaw rate of the vehicle, and the road surface cant. The error (hereinafter, referred to as a "model gain error") of the motion equation is likely to be changed due to the degree of the steering angle, slip angle, and yaw rate of the vehicle, and the road surface cant. Therefore, during the correction of the offset amount by the offset amount correcting unit, when the rate of change varies depending on the degree of at least one of the steering angle, slip angle, and yaw rate of the vehicle, and the road surface cant, it is possible to suppress the influence of the model gain error and accurately correct the set offset amount.

When the vehicle is turned, the offset amount correcting unit may set the rate of change in the offset amount in the correction to be less than that when the vehicle goes straight, or stop the correction. When the vehicle is turned, there is a concern that the model gain error will be more than that when the vehicle goes straight. Therefore, according to this structure in which, when the vehicle is turned, the rate of change is less than that when the vehicle goes straight, or correction is stopped, it is possible to suppress the influence of the model gain error and accurately correct the set offset amount.

**Advantageous Effects of Invention**

According to the invention, it is possible to accurately estimate the offset amounts of sensors.

**Brief Description of Drawings**

Fig. 1 is a block diagram illustrating a sensor offset amount estimate device according to a first embodiment of the invention.
Fig. 2 is a flowchart illustrating the process of the sensor offset amount estimate device shown in Fig. 1.
Fig. 3 is a diagram illustrating a road camber amount.
Fig. 4 is a diagram illustrating a two-wheel model for explaining the motion equation of a vehicle.
Fig. 5(a) is a perspective view illustrating a balance equation of force around a tire, Fig. 5(b) is a side view illustrating the balance equation of force around the tire, and Fig. 5(c) is a top view illustrating the balance equation of force around the tire.
Fig. 6 is a diagram illustrating the correction of an offset amount.
Fig. 7 is a diagram illustrating an example of a weight coefficient map.
Fig. 8 is a block diagram illustrating a sensor offset amount estimate device according to a second embodiment of the invention.
Fig. 9 is a block diagram illustrating a sensor offset amount estimate device according to a third embodiment of the invention.

**Description of Embodiments**

Hereinafter, exemplary embodiments of the invention will be described in detail with reference to the accompanying drawings. In the following description, the same or equivalent components are denoted by the same reference numerals and a description thereof will not be repeated. In addition, "^" attached on the upper side of a symbol indicates a value before correction, "-" attached on the upper side of a symbol indicates an average value, and "~" attached on the upper side of a symbol indicates a value after correction. In some cases, "^", "-", and "~" are attached on the upper right side of the symbol for convenience of description.

(First embodiment)

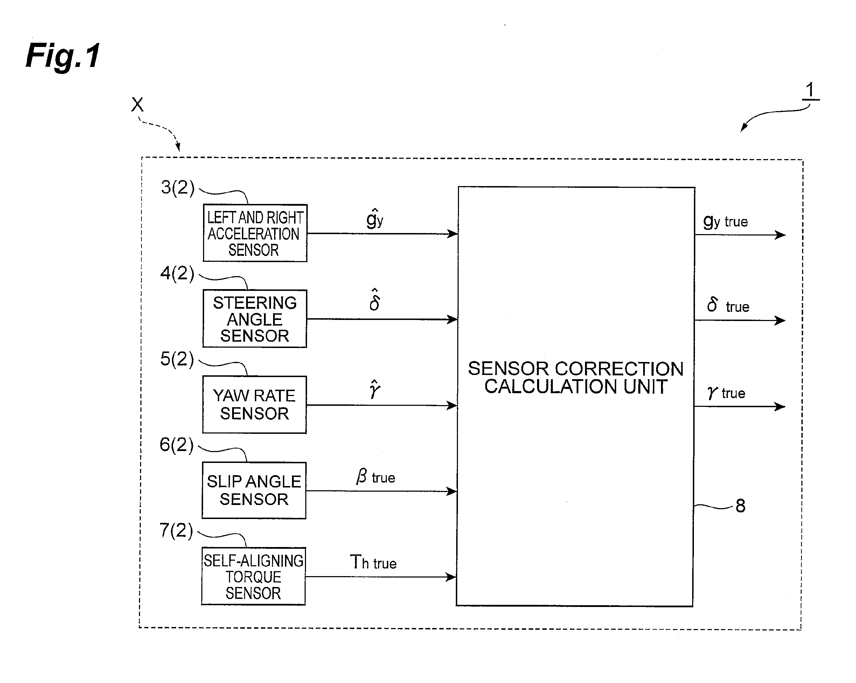

First, a first embodiment of the invention will be described. Fig. 1 is a block diagram illustrating a sensor offset amount estimate device according to the first embodiment of the invention. As shown in Fig. 1, a sensor offset amount estimate device 1 is provided in a vehicle X, such as a car. The sensor offset amount estimate device 1 estimates the offset amounts of sensors 2 that detect traveling information related to the traveling of the vehicle X and corrects (learns) the offset amounts.

The sensors 2 include a left and right acceleration sensor 3, a steering angle sensor 4, a yaw rate sensor 5, a slip angle sensor 6, and a self-aligning torque ("SAT") sensor 7.

The left and right acceleration sensor 3 detects left and right acceleration $g\hat{}_y$, which is the horizontal G of the vehicle X. The steering angle sensor 4 detects the steering angle $\delta\hat{}$ of the vehicle X. The yaw rate sensor 5 detects the yaw rate $\gamma\hat{}$ of the vehicle X. The slip angle sensor 6 detects the slip angle $\beta_{true}$ of the vehicle X. In this embodiment, the slip angle sensor 6 detects the slip angle $\beta_{true}$ on the basis of, for example, the ground speed of the vehicle obtained by receiving emitted light.

The SAT sensor 7 detects self-aligning $T_h$. In this embodiment, the SAT sensor 7 detects the self-aligning torque $T_h$ on the basis of torque by power steering and torque by the driver.

In this embodiment, the sensor offset amount estimate device 1 includes a sensor correction calculation unit 8. The sensor correction calculation unit 8 is, for example, an ECU (Electronic Control Unit) including a CPU, a ROM, and a RAM. The sensor correction calculation unit 8 is connected to the sensors 2 and receives the traveling information (hereinafter, referred to as a "sensor value") detected by the sensors 2.

The sensor correction calculation unit 8 estimates and corrects the offset amount of each of the left and right acceleration sensor 3, the steering angle sensor 4, and the yaw rate sensor 5 on the basis of a motion equation considering road camber (road surface cant) when the vehicle X is turned, a balance equation of force around the tire of the vehicle X, and the sensor values detected by the sensors 2. Then, the sensor correction calculation unit 8 outputs the corrected left and right acceleration $g_{y\,true}$, the corrected steering angle $\delta_{true}$, and the corrected yaw rate $\gamma_{true}$ as the corrected sensor values (which will be described in detail below).

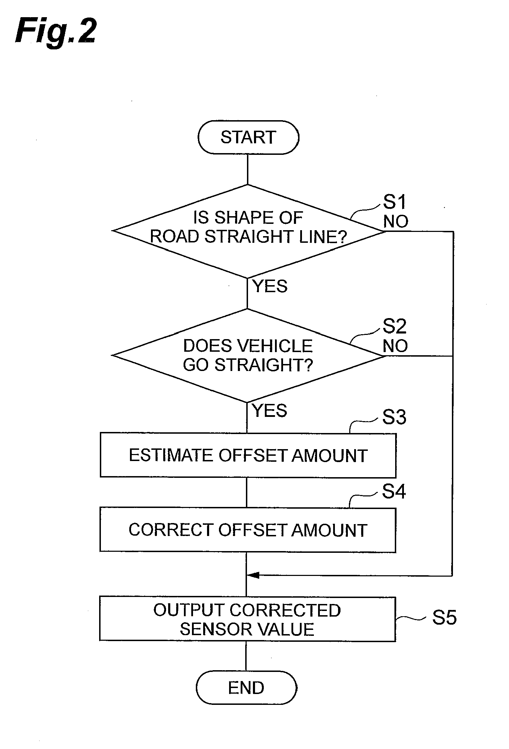

Next, the operation of the sensor offset amount estimate device 1 having the above-mentioned structure will be described with reference to the flowchart shown in Fig. 2.

The sensor offset amount estimate device 1 according to this embodiment performs the following process during the traveling of the vehicle X. That is, first, for example, the sensor offset amount estimate device 1 determines whether the shape of the road on which the vehicle X travels is a straight line (or a line close to a straight line) using a camera or a GPS (Global Positioning System) (S1). Specifically, the sensor offset amount estimate device 1 detects the curvature of the road or the yaw angle of the vehicle X and determines whether the detected value is equal to or less than a predetermined value.

In addition, the sensor offset amount estimate device 1 determines whether the vehicle X normally goes straight (or close to straight) (S2). Specifically, the sensor offset amount estimate device 1 determines whether the steering angle $\delta\hat{}$ and the yaw rate $\gamma\hat{}$ respectively detected by the steering angle sensor 4 and the yaw rate sensor 5 are in a predetermined range. In Step S2, the sensor offset amount estimate device 1 may determine whether the values obtained by filtering the steering angle $\delta\hat{}$ and the yaw rate $\gamma\hat{}$ with a high-pass filter are in a predetermined range.

Then, when the determination result in Steps S1 and S2 are "YES", the sensor correction calculation unit 8 estimates the offset amounts of the sensors 3 to 5 on the basis of the motion equation considering road camber when the vehicle X is turned, the balance equation of force around the tire of the vehicle X, and the left and right acceleration $g\hat{}_y$, the steering angle $\delta$, the yaw rate $\gamma$, the slip angle $\beta_{true}$, and the self-aligning torque $T_{h\,true}$ detected by the sensors 3 to 7 (S3). In this embodiment, in the sensor correction calculation unit 8, the following calculation expressions are incorporated as the "motion equation considering road camber" and the "balance equation of force around the tire".

[Motion equation considering road camber]

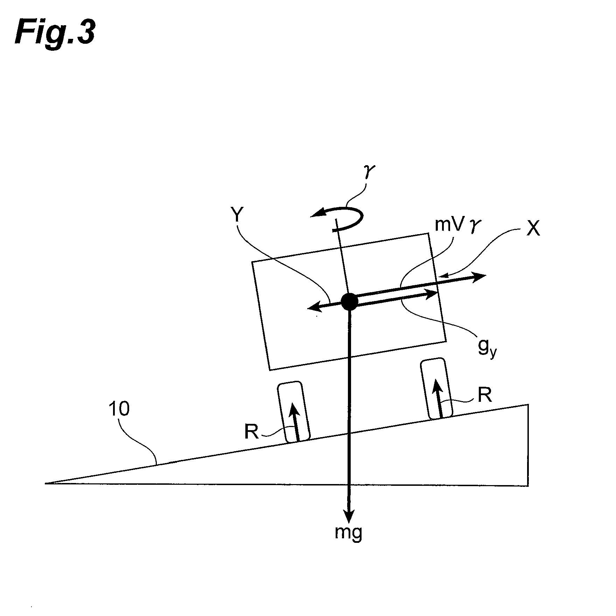

As shown in Fig. 3, the gravity mg of the vehicle X, the reaction force R of a road camber road 10, centrifugal force $mV\gamma$, and left and right acceleration $g_y$ are applied to the vehicle X that is turned on the road camber road 10 at the yaw rate $\gamma$. Therefore, a road camber amount Y is estimated by the following Expression 1:

$$[\text{Expression 1}]$$

$$Y = m(V\gamma + g_y)$$

(where Y: a road camber amount, m: the mass of the vehicle X, V: a vehicle speed, $\gamma$: a yaw rate, and $g_y$: left and right acceleration).

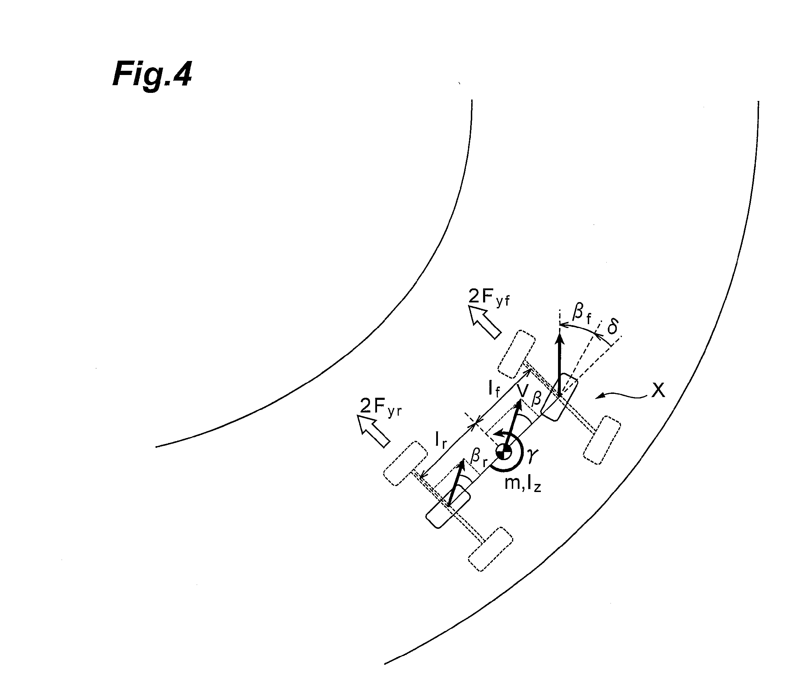

Therefore, for example, the motion equation considering the road camber when the vehicle X is turned may be represented by the following Expression 2 in a two-wheel model shown in Fig. 4:

[Expression 2]

$$mV(\frac{d\beta}{dt}+\gamma) = 2F_{yf} + 2F_{yr} + Y$$

$$I_z\frac{d\gamma}{dt} = 2l_f F_{yf} - 2l_r F_{yr}$$

(where $\beta$: a slip angle, $I_z$: the second moment of area of the vehicle X, $l_f$: a distance from the center of gravity to the center of a front wheel shaft, and $l_r$: a distance from the center of gravity to the center of a rear wheel shaft).

When $F_{yf}$ and $F_{yr}$ in the above-mentioned Expression 2 and the following Expression 3 are substituted and arranged, the following Expression 4 is obtained:

[Expression 3]

$$F_{yf} = -C_f\beta_f = -C_f(\beta + \frac{l_f}{V}\gamma - \delta)$$

$$F_{yr} = -C_r\beta_r = -C_r(\beta + \frac{l_r}{V}\gamma)$$

;

and

[Expression 4]

$$mV\frac{d\beta}{dt} + 2(C_f + C_r)\beta + \left\{mV + \frac{2}{V}(l_f C_f - l_r C_r)\right\}\gamma = 2C_f\delta + Y$$

$$2(l_f C_f - l_r C_r)\beta + I_z\frac{d\gamma}{dt} + \frac{2}{V}(l_f{}^2 C_f - l_r{}^2 C_r)\gamma = 2l_f C_f\delta$$

(where $C_f$: front wheel cornering force, $\delta$: a steering angle, and $C_f$: rear wheel cornering force).

When the above-mentioned expressions are arranged under normal conditions ($d\beta/dt = d\gamma/dt = 0$), the following Expression 5 is obtained:

[Expression 5]

$$\beta = \begin{vmatrix} 2C_f\delta+Y & mV+\frac{2}{V}(l_fC_f-l_rC_r) \\ 2l_fC_f\delta & \frac{2}{V}(l_f^2C_f-l_r^2C_r) \end{vmatrix}\frac{1}{\Delta} \qquad \gamma = \begin{vmatrix} 2(C_f+C_r) & 2C_f\delta+Y \\ 2(l_fC_f-l_rC_r) & 2l_fC_f\delta \end{vmatrix}\frac{1}{\Delta}$$

$$\Delta = \begin{vmatrix} 2(C_f+C_r) & mV+\frac{2}{V}(l_fC_f-l_rC_r) \\ 2(l_fC_f-l_rC_r) & \frac{2}{V}(l_f^2C_f-l_r^2C_r) \end{vmatrix} .$$

The above-mentioned Expression 5 can be transformed into the following Expression 6 by a determinant theorem. When the determinant represented by the following Expression 6 is solved, the following Expression 7 is obtained as a motion equation:

[Expression 6]

$$\beta = \begin{vmatrix} 2C_f & mV+\frac{2}{V}(l_fC_f-l_rC_r) \\ 2l_fC_f & \frac{2}{V}(l_f^2C_f-l_r^2C_r) \end{vmatrix}\frac{\delta}{\Delta} + \begin{vmatrix} 1 & mV+\frac{2}{V}(l_fC_f-l_rC_r) \\ 0 & \frac{2}{V}(l_f^2C_f-l_r^2C_r) \end{vmatrix}\frac{Y}{\Delta}$$

$$\gamma = \begin{vmatrix} 2(C_f+C_r) & 2C_f \\ 2(l_fC_f-l_rC_r) & 2l_fC_f \end{vmatrix}\frac{\delta}{\Delta} + \begin{vmatrix} 2(C_f+C_r) & 1 \\ 2(l_fC_f-l_rC_r) & 0 \end{vmatrix}\frac{Y}{\Delta} \quad ;$$

and

[Expression 7]

$$\beta = \beta_\delta + \beta_c = \frac{1-\frac{m}{2l}\frac{l_f}{l_rC_r}V^2}{1+AV^2}\frac{l_r}{l}\delta + \frac{l_f^2C_f+l_rC_r}{2l^2C_fC_r(1+AV^2)}Y$$

$$\gamma = \gamma_\delta + \gamma_c = \frac{1}{1+AV^2}\frac{V}{l}\delta + \frac{-(l_fC_f-l_rC_r)V}{2l^2C_fC_r(1+AV^2)}Y$$

(where $\beta_\delta$: a slip angle generated by steering, $\beta_c$: a slip angle generated by road camber, $\gamma_\delta$: a yaw rate generated by steering, $\gamma_c$: a yaw rate generated by road camber, and A: a stability factor).

[Balance equation of force around tire]

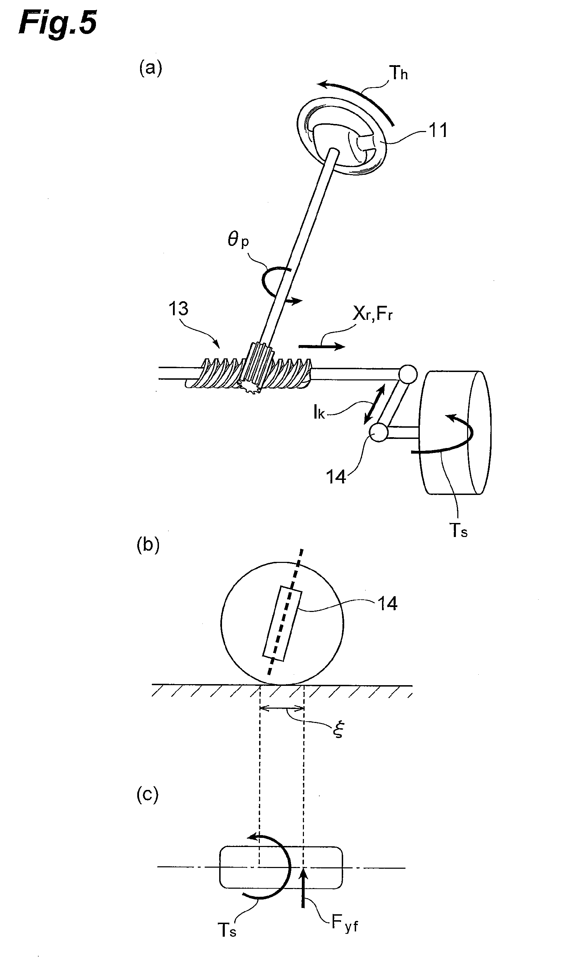

Since the balance equation of force around the tire of the vehicle X is, for example, the balance equation of force around a kingpin 14 shown in Fig. 5, it can be represented by the following Expression 8:

[Expression 8]

$$T_h = \frac{2\xi N_r}{l_k} C_f (\beta + \frac{l_f}{V} \gamma - \delta)$$

(where $T_h$: steering torque, $\xi$: caster trail $\xi_c$, + pneumatic trail $\xi_n$, $N_r$: a specific stroke (nut lead), and $l_k$: the effective length of a knuckle arm).

In Fig. 5, $\theta_p$ indicates a pinion angle, $x_r$ indicates rack displacement, $F_r$ indicates rack axial force, $T_s$ indicates torque around the kingpin 14, and $F_{yf}$ indicates cornering force. In addition, Fig. 5 shows a rack-and-pinion EPS (Electric Power Steering) 13 that is driven in response to the operation of a steering wheel 11 by the driver.

When the relation of the above-mentioned Expression 7 is substituted into Expression 8, the following Expression 9 is obtained as the balance equation of force around the tire:

[Expression 9]

$$T_h = \tau_\delta + \tau_c = \frac{2\xi N_r}{l_k} C_f (\beta_\delta + \frac{l_f}{V} \gamma_\delta - \delta) + \frac{2\xi N_r}{l_k} C_f (\beta_c + \frac{l_f}{V} \gamma_c)$$

(where $\tau_\delta$: self-aligning torque generated by steering and $\tau_c$: self-aligning torque generated by road camber).

Therefore, finally, the sensor correction calculation unit 8 indicates the motion of the vehicle X using a calculation expression (model) including three simultaneous equations represented by the following Expression 10:

[Expression 10]

$$\beta = \beta_\delta + \beta_c = \frac{1 - \frac{m}{2l} \frac{l_f}{l_r C_r} V^2}{1 + AV^2} \frac{l_r}{l} \delta + \frac{l_f^2 C_f + l_r C_r}{2l^2 C_f C_r (1 + AV^2)} Y$$

$$\gamma = \gamma_\delta + \gamma_c = \frac{1}{1 + AV^2} \frac{V}{l} \delta + \frac{-(l_f C_f - l_r C_r)V}{2l^2 C_f C_r (1 + AV^2)} Y$$

$$T_h = \tau_\delta + \tau_c = \frac{2\xi N_r}{l_k} C_f (\beta_\delta + \frac{l_f}{V} \gamma_\delta - \delta) + \frac{2\xi N_r}{l_k} C_f (\beta_c + \frac{l_f}{V} \gamma_c)$$

When the sensor values detected by the sensors 3 to 5 and the road camber amount Y (see the following Expression 11) are substituted as $\delta_{true} = \delta$ and $\gamma_{true} = \gamma$ into the above-mentioned Expression 10, the following Expression 12 having three unknown variables and three equations:

[Expression 11]

$$\hat{\gamma} = \gamma_{true} + \gamma_{offset} \qquad \hat{\delta} = \delta_{true} + \delta_{offset} \qquad \hat{g}_y = g_{y\,true} + g_{y\,offset}$$

$$Y = m(V\hat{\gamma} + \hat{g}_y) = m(V\gamma_{true} + V\gamma_{offset} + g_{y\,true} + g_{y\,offset})$$

;

and

[Expression 12]

$$\beta_{true} = \frac{1 - \dfrac{m}{2l}\dfrac{l_f}{l_r C_r}V^2}{1 + AV^2}\dfrac{l_r}{l}(\hat{\delta} - \delta_{offset}) + \dfrac{l_f^2 C_f + l_r C_r}{2l^2 C_f C_r(1 + AV^2)}(m(V\hat{\gamma} + \hat{g}_y) - m(V\gamma_{offset} + g_{y offset}))$$

$$\hat{\gamma} - \gamma_{offset} = \frac{1}{1 + AV^2}\frac{V}{l}(\hat{\delta} - \delta_{offset}) + \frac{-(l_f C_f - l_r C_r)V}{2l^2 C_f C_r(1 + AV^2)}(m(V\hat{\gamma} + \hat{g}_y) - m(V\gamma_{offset} + g_{y offset}))$$

$$T_h = \frac{2\xi N_r}{l_k}C_f\left(\beta_{true} + \frac{l_f}{V}(\hat{\gamma} - \gamma_{offset}) + (\hat{\delta} - \delta_{offset})\right)$$

(where $\gamma_{true}$: the true value of the yaw rate, $\gamma_{offset}$: the offset amount of the yaw rate amount sensor, $\delta_{true}$: the true value of a steering angle, $\delta_{offset}$: the offset amount of the steering angle sensor, $g_y$ true: the true value of left and right acceleration, and $g_{y\,offset}$: the offset amount of the left and right acceleration sensor).
As a result, when Expression 12 is solved, the offset amounts $g_{y\,offset}$, $\delta_{offset}$, and $\gamma_{offset}$ of the sensors 3 to 5 are derived and estimated.

Then, Step S3 is repeated for T seconds (for example, 4 seconds) to derive the offset amount average values of the estimated offset amounts $\gamma_{offset}$, $\delta_{offset}$, and $g_{y\,offset}$ for T seconds. Then, the set offset amount is corrected, that is, the final offset amount is calculated on the basis of the current offset amount average values for T seconds and the previous offset amount average values for T seconds (S4).

Specifically, it is determined whether calculation during T seconds is valid, partially invalid (or an invalid rate), or invalid on the basis of the difference between the offset amount average value and an offset amount true value (offset amount regarded as a true value). Then, the final offset amount is calculated by the following Expression 13:

[Expression 13]

$$\tilde{g}_{y offset} = K\overline{g}_{y offset}(n) + (1 - K)\overline{g}_{y offset}(n-1)$$

$$\tilde{\delta}_{offset} = K\overline{\delta}_{offset}(n) + (1 - K)\overline{\delta}_{offset}(n-1)$$

$$\tilde{\gamma}_{offset} = K\overline{\gamma}_{offset}(n) + (1 - K)\overline{\gamma}_{offset}(n-1)$$

(where $\tilde{g}_{y\,offset}$: the final offset amount of the left and right acceleration sensor, $\overline{g}_{y\,offset}(n)$: the current offset amount average value of the left and right acceleration sensor, $\overline{g}_{y\,offset}(n-1)$: the previous offset amount average value of the left and right acceleration sensor, $\tilde{\delta}_{offset}$: the final offset amount of the steering angle sensor, $\overline{\delta}_{offset}(n)$: the current offset amount average value of the steering angle sensor, $\overline{\delta}_{offset}(n-1)$: the previous offset amount average value of the

steering angle sensor, $\gamma_{\sim offset}$: the final offset amount of the yaw rate sensor, $\gamma_{offset}(n)$: the current offset amount average value of the yaw rate sensor, and $\gamma_{offset}(n-1)$: the previous offset amount average value of the yaw rate sensor).

In this case, a weight coefficient K in Expression 13 varies depending on the calculation result.

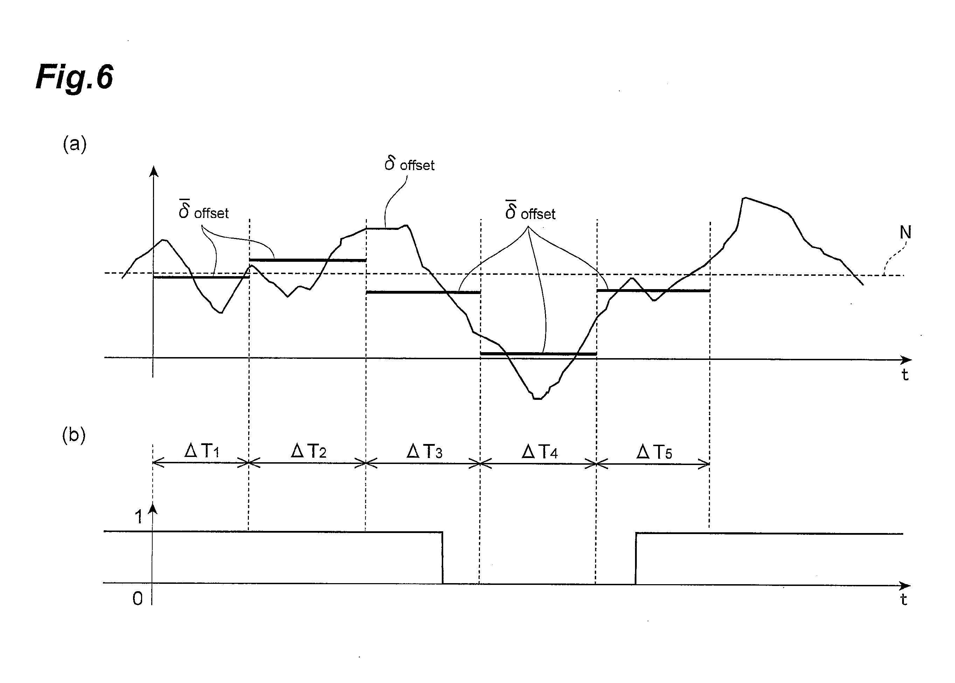

Fig. 6 is a diagram illustrating the correction of the offset amount. Fig. 6(a) shows an example of a variation in the estimated offset amount $\gamma_{offset}$ of the yaw rate over time and Fig. 6(b) shows a valid flag for the offset amount $\gamma_{offset}$ shown in Fig. 6 (a).

As shown in Fig. 6, since the difference between the offset amount average value $\gamma_{offset}$ and the offset amount true value N is less than a predetermined value for $\Delta T1$ and $\Delta T2$, the calculation flag is 1. Therefore, the determination result is valid. Since the difference between the offset amount average value $\gamma_{offset}$ and the offset amount true value N is equal to or more than the predetermined value for a portion of $\Delta T3$ and $\Delta T5$, the calculation flag is partially 0 (the calculation flag is 1 in the other portions). Therefore, the determination result is partially invalid. Since the difference between the offset amount average value $\gamma_{offset}$ and the offset amount true value N is equal to or more than the predetermined value for $\Delta T4$, the calculation flag is 0 and the determination result is invalid. For the invalid rate, the invalid rate is calculated as (invalid time/T seconds).

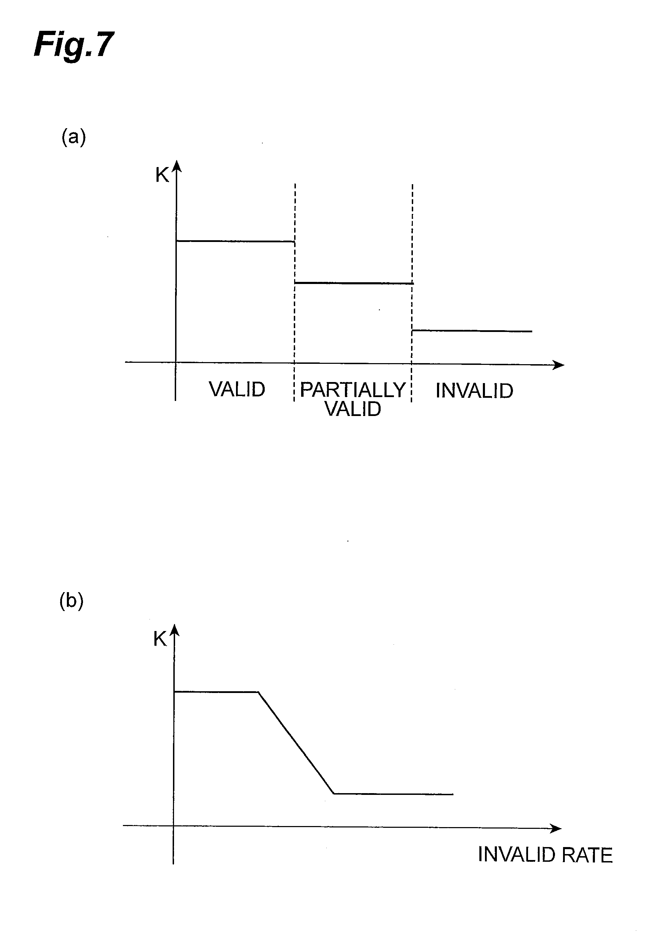

Fig. 7 is a diagram illustrating an example of a weight coefficient map. In the example shown in Fig. 7(a), the weight coefficient K is configured so as to discretely vary depending on the determination result in the calculation for T seconds. In the example shown in Fig. 7(b), the weight coefficient K is configured so as to linearly vary depending on the invalid rate.

When the determination result in Steps S1 and S2 is "No", the offset amount is not estimated and corrected and the previous final offset amount is maintained.

Then, the corrected left and right acceleration $g_y$ true, the corrected steering angle $\delta_{true}$, and the corrected yaw rate $\gamma_{true}$ are derived as the corrected sensor values from the final offset amount and the sensor values detected by the sensors 3 to 5 and then output (S5).

In this way, the sensor offset amount estimate device 1 according to this embodiment can estimate the offset amounts $g_y$ offset, $\delta_{offset}$, and $\gamma_{offset}$ of the sensors 3 to 5, appropriately considering the road camber amount Y Therefore, even when the vehicle travels on the road with road camber, it is possible to accurately estimate the offset amounts $g_{y\ offset}$, $\delta_{offset}$, and $\gamma_{offset}$ of the sensors 3 to 5 at a time.

As a result, in this embodiment, it is possible to minimize the errors of the sensors 3 to 5 that play an important role as a means for acquiring traveling information for vehicle control during the traveling of the vehicle. Therefore, when vehicle control is performed using this embodiment, the accuracy of the vehicle control is improved.

When the vehicle X is turned, for example, a model gain error, which is an error in the calculation expression represented by the above-mentioned Expression 10 increases and the estimation accuracy of the offset amounts $g_{y\ offset}$, $\delta_{offset}$, and $\gamma_{offset}$ is likely to be reduced. Therefore, in this embodiment, as described above, only when the road is straight and the vehicle X normally goes straight, the offset amounts $g_{y\ offset}$, $\delta_{offset}$, and $\gamma_{offset}$ are corrected (NO in Steps S1 and S2). According to this embodiment, it is possible to suppress the influence of the model gain error and accurately correct the offset amounts $g_{y\ offset}$, $\delta_{offset}$, and $\gamma_{offset}$.

However, in the related art, in some cases, in order to accurately acquire the sensor values of the sensors 3 to 5, the sensor values are filtered by a high-pass filter. In this case, there is a concern that a traveling information component which is desired to be detected (a normal sensor value in a low frequency range) will be removed. In contrast, in this embodiment, as described above, filtering is not needed and the above-mentioned operation and effect (the effect of accurately estimating the offset amounts $g_{y\ offset}$, $\delta_{offset}$, and $\gamma_{offset}$) are obtained by a simple structure. Therefore, this embodiment is particularly effective.

In this embodiment, as described above, only when the vehicle X goes straight, the offset amounts are corrected, but the invention is not limited thereto. For example, when the vehicle X is turned, the weight coefficient K represented by the above-mentioned Expression 13 may be less than that when the vehicle X goes straight. The point is that the weight coefficient K (that is, the rate of change in the correction of the offset amount) may vary depending on the degree of at least one of the steering angle $\delta$, slip angle $\beta$, and yaw rate $\gamma$ of the vehicle X, and the road camber amount Y

(Second embodiment)

Next, a second embodiment of the invention will be described. In this embodiment, the difference from the first embodiment will be mainly described.

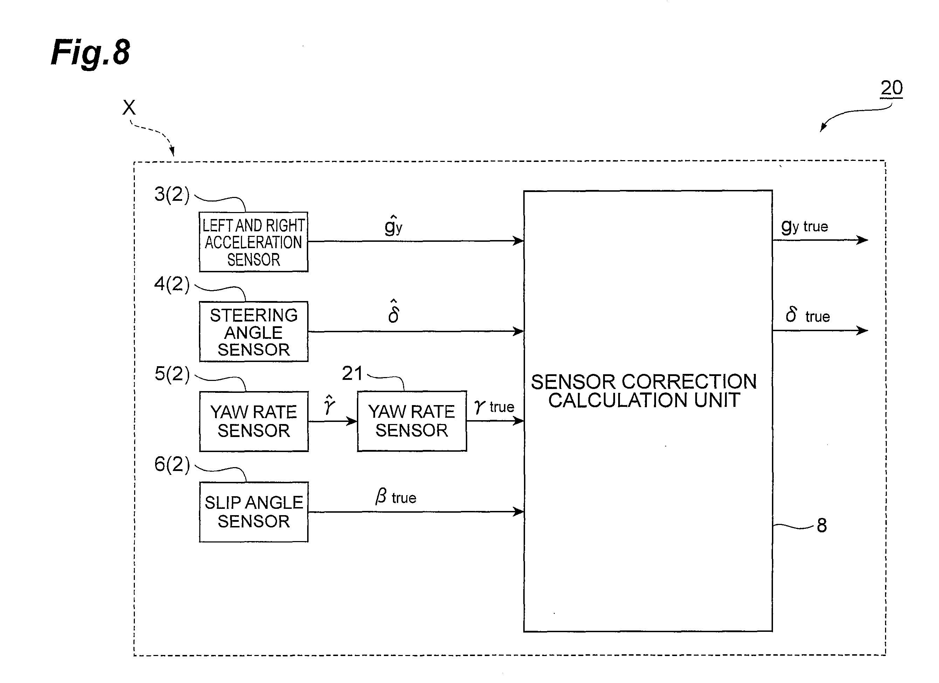

Fig. 8 is a block diagram illustrating a sensor offset amount estimate device according to a second embodiment of the invention. As shown in Fig. 8, sensors 2 according to this embodiment include a left and right acceleration sensor 3, a steering angle sensor 4, a yaw rate sensor 5, and a slip angle sensor 6.

A sensor offset amount estimate device 20 according to this embodiment further includes a yaw rate sensor offset amount correcting unit 21. The yaw rate sensor offset amount correcting unit 21 corrects the offset amount $\gamma_{offset}$ of the yaw rate sensor 5. In this embodiment, the yaw rate sensor offset amount correcting unit 21 performs the correction such that the offset amount $\gamma_{\text{offset}}$ is 0 when a vehicle X is stopped.

A sensor correction calculation unit 8 according to this embodiment estimates and corrects the offset amounts of the left and right acceleration sensor 3 and the steering angle sensor 4 on the basis of a motion equation considering road camber when the vehicle X is turned and the sensor value detected by the sensor 2. Then, the sensor correction calculation unit 8 outputs the corrected left and right acceleration $g_{y\,\text{true}}$ and the corrected steering angle $\delta_{\text{true}}$ as the corrected sensor values.

Specifically, finally, the sensor correction calculation unit 8 indicates the motion of the vehicle X using a calculation expression (model) including two simultaneous equations represented by the following Expression 14:

[Expression 14]

$$\beta = \beta_\delta + \beta_c = \frac{1 - \dfrac{m}{2l}\dfrac{l_f}{l_r C_r}V^2}{1 + AV^2}\frac{l_r}{l}\delta + \frac{l_f^2 C_f + l_r C_r}{2l^2 C_f C_r (1 + AV^2)}Y$$

$$\gamma = \gamma_\delta + \gamma_c = \frac{1}{1 + AV^2}\frac{V}{l}\delta + \frac{-(l_f C_f - l_r C_r)V}{2l^2 C_f C_r (1 + AV^2)}Y$$

.

Then, the sensor values detected by the sensors 3 and 4 and a road camber amount Y (see the following Expression 15) are substituted as $\delta_{\text{true}} = \delta$ and $\gamma_{\text{true}} = \gamma$ into the above-mentioned Expression 14 to derive the following Expression 15 having two unknown variables and two equations:

[Expression 15]

$$\hat{\delta} = \delta_{\text{true}} + \delta_{\text{offset}} \qquad \hat{g}_y = g_{y\,\text{true}} + g_{y\,\text{offset}}$$

$$Y = m(V\gamma + \hat{g}_y) = m(V\gamma + g_{y\,\text{true}} + g_{y\,\text{offset}})$$

;

and

[Expression 16]

$$\beta_{\text{true}} = \frac{1 - \dfrac{m}{2l}\dfrac{l_f}{l_r C_r}V^2}{1 + AV^2}\frac{l_r}{l}(\hat{\delta} - \delta_{\text{offset}}) + \frac{l_f^2 C_f + l_r C_r}{2l^2 C_f C_r (1 + AV^2)}(m(V\gamma + \hat{g}_y - g_{y\text{offset}}))$$

$$\gamma = \frac{1}{1 + AV^2}\frac{V}{l}(\hat{\delta} - \delta_{\text{offset}}) + \frac{-(l_f C_f - l_r C_r)V}{2l^2 C_f C_r (1 + AV^2)}(m(V\hat{\gamma} + \hat{g}_y - g_{y\text{offset}}))$$

.

As a result, when the above-mentioned Expression 15 is calculated and solved, the offset amounts $g_{y\,\text{offset}}$ and $\delta_{\text{offset}}$ of the sensors 3 and 4 are derived and estimated.

In this way, in this embodiment, it is possible to estimate the offset amounts $g_{y\ offset}$ and $\delta_{offset}$ of the sensors 3 and 4, appropriately considering the road camber amount Y Therefore, it is possible to accurately estimate the offset amounts $g_{y\ offset}$ and $\delta_{offset}$ of the sensors 3 and 4.

In this embodiment, as described above, the yaw rate sensor offset amount correcting unit 21 that corrects the offset amount $\gamma_{offset}$ of the yaw rate sensor 5 is separately provided and the sensor correction calculation unit 8 estimates the offset amounts $g_{y\ offset}$ and $\delta_{offset}$ of the sensors 3 and 4. In this case, as represented by the above-mentioned Expressions 12 and 16, it is possible to reduce the number of simultaneous equations from 3 to 2, as compared to the first embodiment, and thus simplify calculation. In addition, since the SAT sensor 7 is not needed, it is possible to simplify the structure.

In this embodiment, the offset amounts $g_{y\ offset}$ and $\delta_{offset}$ of the sensors 3 and 4 among the sensors 3 to 5 are estimated and corrected. Instead of the structure, the offset amounts $g_{y\ offset}$ and $\gamma_{offset}$ of the sensors 3 and 5 may be estimated and corrected, or the offset amounts $\delta_{offset}$ and $\gamma_{offset}$ of the sensors 4 and 5 may be estimated and corrected.

The offset amount $\gamma_{offset}$ of the yaw rate sensor 5 is relatively easily calculated by a general method used in, for example, an antiskid brake system (for example, Vehicle Stability Control (VSC)). From this point, the structure of this embodiment that estimates the offset amounts $g_{y\ offset}$ and $\delta_{offset}$ of the sensors 3 and 4 other than the yaw rate sensor 5 is practical.

(Third embodiment)

Next, a third embodiment of the invention will be described. In this embodiment, the difference from the second embodiment will be mainly described.

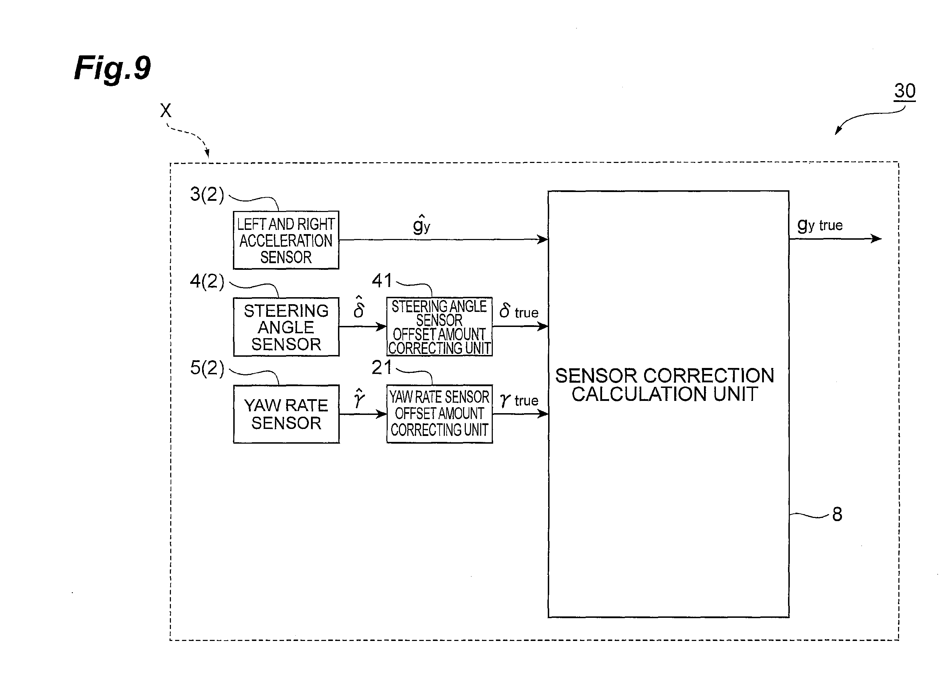

Fig. 9 is a block diagram illustrating a sensor offset amount estimate device according to a third embodiment of the invention. As shown in Fig. 9, sensors 2 according to this embodiment include a left and right acceleration sensor 3, a steering angle sensor 4, and a yaw rate sensor 5.

A sensor offset amount estimate device 30 according to this embodiment further includes a steering angle sensor offset amount correcting unit 31. The steering angle sensor offset amount correcting unit 31 corrects the offset amount $\delta_{offset}$ of the steering angle sensor 4. In this embodiment, when the yaw rate sensor offset amount correcting unit 21 corrects the yaw rate $\gamma$ and the yaw rate $\gamma$ is maintained at 0 for a predetermined period of time during the traveling of a vehicle X, the steering angle sensor offset amount correcting unit 31 performs correction such that the steering angle $\delta$ is 0.

A sensor correction calculation unit 8 according to this embodiment estimates and corrects the offset amount $g_{y\ offset}$ of the left and right acceleration sensor 3 on the basis of a motion equation considering road camber when the vehicle X is turned and the sensor value detected by the sensor 2. Then, the sensor correction calculation unit 8 outputs the corrected left and right acceleration $g_{y\ true}$ as the corrected sensor value.

Specifically, finally, the sensor correction calculation unit 8 indicates the motion of the vehicle X using one calculation expression (model) represented by the following Expression 17:

[Expression 17]

$$\gamma = \gamma_\delta + \gamma_c = \frac{1}{1+AV^2}\frac{V}{l}\delta + \frac{-(l_f C_f - l_r C_r)V}{2l^2 C_f C_r(1+AV^2)}Y$$

Then, the sensor value detected by the left and right acceleration sensor 3 and a road camber amount Y (see the following Expression 18) are substituted into the above-mentioned Expression 14 to derive the following Expression 19 having one unknown variable 1 and one equation:

[Expression 18]

$$\hat{g}_y = g_{y\,true} + g_{y\,offset}$$

$$Y = m(V\gamma + \hat{g}_y) = m(V\gamma + g_{y\,true} + g_{y\,offset})\quad ;$$

and

[Expression 19]

$$\gamma = \frac{1}{1+AV^2}\frac{V}{l}\delta + \frac{-(l_f C_f - l_r C_r)V}{2l^2 C_f C_r (1+AV^2)}(m(V\hat{\gamma} + \hat{g}_y - g_{y\,offset})) \quad .$$

As a result, when the above-mentioned Expression 19 is calculated and solved, the offset amount $g_{y\,offset}$ of the left and right acceleration sensor 3 is derived and estimated.

In this way, in this embodiment, it is possible to estimate the offset amount $g_{y\,offset}$ of the left and right acceleration sensor 3, appropriately considering the road camber amount Y Therefore, it is possible to accurately estimate the offset amount $g_{y\,offset}$.

In addition, in this embodiment, as described above, the steering angle sensor offset amount correcting unit 31 that corrects the offset amount $\delta_{offset}$ of the steering angle sensor 4 is separately provided and the sensor correction calculation unit 8 estimates only the offset amount $g_{y\,offset}$ of the left and right acceleration sensor 3. In this case, as shown in the above-mentioned Expressions 16 and 19, it is possible to reduce the number of simultaneous equations from 2 to 1, as compared to the second embodiment, and thus further simplify calculation. In addition, since the slip angle sensor 6 is not needed, it is possible to further simplify the structure.

In this embodiment, the offset amount $g_{y\,offset}$ of the left and right acceleration sensor 3 among the sensors 3 to 5 is estimated and corrected. Instead of the structure, the offset amount $\delta_{offset}$ of the steering angle sensor 4 may be estimated and corrected, or the offset amount $\gamma_{offset}$ of the yaw rate sensor 5 may be estimated and corrected.

The exemplary embodiments of the invention have been described above, but the sensor offset amount estimate device according to the invention is not limited to the sensor offset amount estimate devices 1, 20, and 30 according to the embodiments. Various modifications can be made without departing from the scope and spirit of the invention defined by appended claims, or the invention can be applied to other structures.

For example, as the slip angle sensor 6, an estimating means for estimating the slip angle $\beta_{true}$ by an observer using a camera or a GPS may be used. In addition, as the SAT sensor 7, a means for directly detecting the self-aligning torque, for example, a strain gauge may be used.

The correction of the offset amount is not limited to the weighting correction represented by the above-mentioned Expression 13, but various kinds of general methods may be used. In the above description, the sensor correction calculation unit 8 forms an offset amount estimating unit and an offset amount correcting unit.

**Reference Signs List**

1, 20, 30: SENSOR OFFSET AMOUNT ESTIMATE

**Claims**

1. A sensor offset amount estimate device that estimates offset amounts of sensors detecting traveling information of a vehicle, comprising:

an offset amount estimating unit that estimates the offset amount of at least one of a left and right acceleration sensor, a steering angle sensor, and a yaw rate sensor serving as the sensors on the basis of a motion equation considering a road surface cant when the vehicle is turned and the traveling information detected by the sensors.

2. The sensor offset amount estimate device according to claim 1,
   wherein the offset amount estimating unit derives, as the motion equation, a yaw rate calculation expression related to a yaw rate of the vehicle and a slip angle calculation expression related to a slip angle of the vehicle and derives a self-aligning torque calculation expression related to a self-aligning torque of the vehicle on the basis of a balance equation of force around a tire of the vehicle, and
   the offset amount estimating unit estimates the offset amounts of the left and right acceleration sensor, the steering angle sensor, and the yaw rate sensor from the yaw rate calculation expression, the slip angle calculation expression, the self-aligning torque calculation expression, and the traveling information.

3. The sensor offset amount estimate device according to claim 1,
   wherein the offset amount estimating unit derives, as the motion equation, a yaw rate calculation expression related to a yaw rate of the vehicle and a slip angle calculation expression related to a slip angle of the vehicle, and
   the offset amount estimating unit estimates the offset amounts of the left and right acceleration sensor and the steering angle sensor from the yaw rate calculation expression, the slip angle calculation expression, and the traveling information.

4. The sensor offset amount estimate device according to claim 1,
   wherein the offset amount estimating unit derives a yaw rate calculation expression related to a yaw rate of the vehicle as the motion equation, and
   the offset amount estimating unit estimates the offset amount of the left and right acceleration sensor from the yaw rate calculation expression and the traveling information.

5. The sensor offset amount estimate device according to any one of claims 1 to 4,
   wherein the offset amount estimating unit includes an offset amount correcting unit that corrects the set offset amount of the sensor on the basis of the estimated offset amount of the sensor.

6. The sensor offset amount estimate device according to claim 5,
   wherein the offset amount correcting unit varies a rate of change in the offset amount in the correction, depending on the degree of at least one of the steering angle, the slip angle, the yaw rate of the vehicle, and the road surface cant.

7. The sensor offset amount estimate device according to claim 6,
   wherein, when the vehicle is turned, the offset amount correcting unit sets the rate of change in the offset amount in the correction to be less than that when the vehicle goes straight, or stops the correction.

**Fig.1**

EP 2 439 543 A1

# Fig.2

START

S1
IS SHAPE OF
ROAD STRAIGHT LINE? — NO

YES

S2
DOES VEHICLE
GO STRAIGHT? — NO

YES

S3
ESTIMATE OFFSET AMOUNT

S4
CORRECT OFFSET AMOUNT

OUTPUT CORRECTED
SENSOR VALUE — S5

END

# Fig.3

**Fig.4**

## *Fig.5*

(a)

$T_h$

11

$\theta_p$

13

$X_r, F_r$

$I_k$

14

$T_s$

(b)

14

$\xi$

(c)

$T_s$

$F_{yf}$

# Fig.6

(a)

(b)

EP 2 439 543 A1

# Fig.7

(a)

K

VALID | PARTIALLY VALID | INVALID

(b)

K

INVALID RATE

## Fig.8

*Fig.9*

<table>
<tr><td colspan="2" align="center">**INTERNATIONAL SEARCH REPORT**</td><td>International application No.<br>PCT/JP2009/060161</td></tr>
</table>

| | |
|---|---|
| A. CLASSIFICATION OF SUBJECT MATTER<br>*G01P21/00*(2006.01)i, *B60W30/00*(2006.01)i, *B60W40/06*(2006.01)i, *B60W40/10*(2006.01)i, *G01B21/22*(2006.01)i, *G01C19/00*(2006.01)i, *G01P15/00*(2006.01)i | |

According to International Patent Classification (IPC) or to both national classification and IPC

| |
|---|
| B. FIELDS SEARCHED |
| Minimum documentation searched (classification system followed by classification symbols)<br>G01P21/00, B60W30/00, B60W40/06, B60W40/10, G01B21/22, G01C19/00, G01P15/00 |
| Documentation searched other than minimum documentation to the extent that such documents are included in the fields searched<br>　Jitsuyo Shinan Koho　　　　　1922-1996　Jitsuyo Shinan Toroku Koho　1996-2009<br>　Kokai Jitsuyo Shinan Koho　1971-2009　Toroku Jitsuyo Shinan Koho　1994-2009 |
| Electronic data base consulted during the international search (name of data base and, where practicable, search terms used) |

| |
|---|
| C. DOCUMENTS CONSIDERED TO BE RELEVANT |

| Category* | Citation of document, with indication, where appropriate, of the relevant passages | Relevant to claim No. |
|---|---|---|
| A | JP 8-136572 A  (Toyota Motor Corp.),<br>31 May, 1996 (31.05.96),<br>Full text<br>(Family: none) | 1-7 |
| A | JP 2001-108701 A  (Toyota Central Research and Development Laboratories, Inc.),<br>20 April, 2001 (20.04.01),<br>Full text<br>& US 6374172 B1　　　　& DE 10049565 A | 1-7 |

| | | | |
|---|---|---|---|
| ☐ Further documents are listed in the continuation of Box C. | | ☐ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>　23 June, 2009 (23.06.09) | Date of mailing of the international search report<br>　30 June, 2009 (30.06.09) |
| Name and mailing address of the ISA/<br>　Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8136572 A